# NEUE EUROPÄISCHE PATENTSCHRIFT

(11) **EP 3 932 174 B2**
(45) Veröffentlichungstag und Bekanntmachung des Hinweises auf die Entscheidung über den Einspruch: **21.01.2026**
(45) Hinweis auf die Patenterteilung: 29.03.2023
(21) Anmeldenummer: 21176852.8
(22) Anmeldetag: 31.05.2021
(51) Int. Cl.: A01D 41/127, A01F 12/44, G01H 17/00

(54) **LANDWIRTSCHAFTLICHE ERNTEMASCHINE**
AGRICULTURAL HARVESTING MACHINE
ENGIN D'ABATTAGE-FAÇONNAGE AGRICOLE

(30) Priorität: 29.06.2020 DE 102020117071
(43) Veröffentlichungstag der Anmeldung: 05.01.2022
(73) Patentinhaber: CLAAS Selbstfahrende Erntemaschinen GmbH, 33428 Harsewinkel (DE)
(72) Erfinder: Fischer, Frédéric, 59759 Arnsberg (DE); Barther, Marvin, 33803 Steinhagen (DE); Neitemeier, Dennis, 59510 Lippetal (DE); Heufekes, Maik, 48145 Münster (DE); Belau, Sven Carsten, 33332 Gütersloh (DE); Witte, Johann, 58730 Fröndenberg (DE)
(74) Vertreter: CLAAS Gruppe

(56) Entgegenhaltungen:
- EP-A1- 0 904 656
- EP-A2- 1 956 361
- EP-A2- 2 189 781
- WO-A1-2006/010761
- WO-A1-2012/163751
- US-B1- 6 442 916
- US-B2- 10 212 883
- US-B2- 7 654 141
- US-B2- 9 648 807

## Beschreibung

Die Erfindung betrifft eine landwirtschaftliche Erntemaschine gemäß dem Oberbegriff von Anspruch 1 sowie ein Verfahren zum Betrieb einer landwirtschaftlichen Erntemaschine gemäß Anspruch 10.

Landwirtschaftliche Erntemaschinen, zu denen etwa Mähdrescher und Feldhäcksler zählen, ernten einen Feldbestand von einem Feld ab und verarbeiten das so gewonnene Erntegut mittels einer Reihe von Arbeitsaggregaten. Grundsätzlich kann bereits der Feldbestand unterschiedliche Qualitäten aufweisen. Teilweise ist die Qualität des Ernteguts jedoch auch beim Erntevorgang noch beeinflussbar. Insbesondere der Separierung von Kornbestandteilen und Nicht-Kornbestandteilen kommt hohe Bedeutung zu. Es ist also einerseits für die direkte Korrektur des Erntevorgangs und andererseits als Information und zur Dokumentation wichtig, die Qualität oder ganz allgemein Erntegutparameter des Ernteguts zu ermitteln.

Die bekannte landwirtschaftliche Erntemaschine (EP 2 826 356 A1 und US US 9 648 807 A1) von der die Erfindung ausgeht, transportiert das Erntegut im Betrieb der Erntemaschine entlang eines Ernteguttransportweges durch die Erntemaschine. Sie weist eine Kontrollanordnung auf, die ein zumindest teilweise an dem Ernteguttransportweg angeordnetes Messsystem zur Analyse der Zusammensetzung und/oder von Inhaltsstoffen des Ernteguts aufweist. Das Messsystem weist einen optischen Sensor zur ortsaufgelösten Aufnahme von sichtbarem Licht aus einem sichtbaren Wellenlängenbereich in einem Sichtfeld auf. In einer Messroutine nimmt das Messsystem Bilddaten des optischen Sensors in dem sichtbaren Wellenlängenbereich auf, die einen Ausschnitt des Ernteguts abbilden. Bei der bekannten landwirtschaftlichen Erntemaschine ist der optische Sensor eine handelsübliche Kamera. Weiterhin weist die Erntemaschine eine Auswerteeinrichtung zur Ermittlung eines Erntegutparameters auf.

Es ist grundsätzlich auch bekannt, nicht-optische Sensoren zur Messung diverser Erntegutparameter zu verwenden. Erwähnenswert ist hier insbesondere eine Feuchte-Messung oder eine Volumenstrom-Messung. Jedes Messprinzip weist dabei grundsätzlich Vor- und Nachteile auf. Gerade optische Messungen mit Kameras sind günstig und flexibel. Sie stoßen bei der Messung physikalischer Eigenschaften des Ernteguts jedoch schnell an ihre Grenzen. So ist es beispielsweise möglich, optisch zwischen Spelzen und Körnern zu unterscheiden, es ist jedoch schwer bis unmöglich, zu erkennen, ob sich in der Spelze noch ein Korn verbirgt oder diese leer ist.

Der Erfindung liegt das Problem zugrunde, die bekannte landwirtschaftliche Erntemaschine derart auszugestalten und weiterzubilden, dass die Ermittlung von Erntegutparametern optimiert wird.

Das obige Problem wird bei einer landwirtschaftlichen Erntemaschine gemäß dem Oberbegriff von Anspruch 1 durch die Merkmale des kennzeichnenden Teils von Anspruch 1 gelöst.

Wesentlich ist die grundsätzliche Überlegung, eine passive optische Messung mittels eines ersten, passiven optischen Sensors mit einer weiteren Messung mittels eines zweiten, nicht-passiv-optischen Sensors örtlich zu kombinieren. Der Kern dieser Kombination liegt dabei in der Messung in einem Überlappungsausschnitt des Ernteguts. Es wird also derselbe Ausschnitt des Ernteguts mittels zweier Messmethoden analysiert, die Messergebnisse werden miteinander korreliert und der Erntegutparameter wird auf Basis beider Messungen ermittelt. Dadurch wird es ermöglicht, den Nachteil der optischen Messung bei der Detektion physikalischer Eigenschaften wirksam im selben Messbereich, also dem Überlappungsausschnitt, zu beseitigen.

Im Einzelnen wird vorgeschlagen, dass das Messsystem einen zweiten, nicht-passiv-optischen, insbesondere nicht-optischen, Sensor zur Aufnahme von Sensordaten in einem Messfeld aufweist, dass das Messsystem in der Messroutine Messwerte des zweiten Sensors aufnimmt, die Erntegut in einem zweiten Ausschnitt des Erntegutstroms abbilden, dass der erste und der zweite Ausschnitt zumindest teilweise in einem Überlappungsausschnitt überlappen und dass die Auswerteeinrichtung in einer Analyseroutine die Bilddaten des ersten Sensors zu dem Überlappungsausschnitt und die Messwerte des zweiten Sensors zu dem Überlappungsausschnitt miteinander korreliert und so den Erntegutparameter ermittelt.

Eine besonders bevorzugte Ausführungsform gemäß Anspruch 2 betrifft die ortsaufgelöste Messung mittels des ersten und/oder zweiten Sensors. Diese Ausgestaltungen sind unter diversen Aspekten besonders interessant. Zum einen sind ortsaufgelöste Kameras kostengünstig. Zum anderen sind die Vorteile optischer Sensoren bei ortsaufgelösten Messungen aufgrund der Vielzahl an Bildverarbeitungsalgorithmen besonders ausgeprägt. Da viele Erntegutparameter auch örtlich sehr inhomogen sind, kommt insbesondere der ortsaufgelösten Messung mittels beider Sensoren hohe Bedeutung zu. So kann beispielsweise mittels der optischen Messung zwischen Spelzen und Körnern unterschieden werden und bei entsprechend hoher Ortsauflösung mittels der weiteren Messung detektiert werden, ob die Spelze leer ist. Schon dieses Beispiel zeigt, wie mittels einer doppelten ortsaufgelösten Messung ganz neue Analysemöglichkeiten eröffnet werden.

Erfindungsgemäß umfasst der zweite Sensor mindestens ein elektromagnetisches Sensorelement. Mittels dieses elektromagnetischen Sensorelements wird mindestens eine elektrische oder magnetische Eigenschaft des Ernteguts abgebildet. Kornbestandteile und Nicht-Kornbestandteile weisen teilweise sehr unterschiedliche elektrische und magnetische Eigenschaften auf. Da elektromagnetische Messungen häufig außerdem kostengünstig und robust durchführbar sind, lassen sich so viele Daten mit wenig Aufwand ermitteln.

Gemäß Anspruch 3 kann das mindestens eine elektromagnetische Sensorelement eine kapazitive Elektrode sein. Zusätzlich oder alternativ kann der zweite Sensor kontaktlos betrieben werden. Kontaktlose kapazitive Messungen werden bereits in vielen Gebieten eingesetzt. Beispielsweise aus dem Bereich der Smartphones stehen bereits ausgereifte kapazitive Elektroden zur Verfügung, auf denen aufgebaut werden kann. Auch erlauben gerade kapazitive Elektroden eine hohe Ortsauflösung. Insbesondere kann so die Analyse einzelner Körner und Nicht-Kornbestandteile ermöglicht werden.

Anspruch 4 gibt bevorzugte Ausgestaltungen des ersten Sensors an.

Die Ansprüche 5 bis 7 geben Möglichkeiten an, die Sensoren zueinander und zur landwirtschaftlichen Erntemaschine im Übrigen anzuordnen. Besonders interessant ist dabei die Möglichkeit, ein lichtdurchlässiges Fenster vorzusehen, das zum einen aufzunehmendes Licht für den ersten Sensor durchlässt und an dem zum anderen der zweite Sensor angeordnet werden kann. Insbesondere in Kombination mit einer kapazitiven Messung kann so mittels einer Touchscreen-ähnlichen Technik am selben Ort optisch und kapazitiv gemessen werden. Die entsprechenden Messdaten können so direkt übereinstimmen und zur gemeinsamen Analyse genutzt werden.

Anspruch 8 betrifft bevorzugte Messorte. Anspruch 9 gibt bevorzugt ermittelbare Erntegutparameter an.

Nach einer weiteren Lehre gemäß Anspruch 10, der eigenständige Bedeutung zukommt, wird ein Verfahren zum Betrieb einer vorschlagsgemäßen landwirtschaftlichen Erntemaschine beansprucht. Auf alle Ausführungen zu der vorschlagsgemäßen landwirtschaftlichen Erntemaschine darf verwiesen werden.
- Fig. 1: eine schematische Seitenansicht eines Mähdreschers als vorschlagsgemäße landwirtschaftliche Erntemaschine,
- Fig. 2: eine schematische Seitenansicht eines Kornelevators des Mähdreschers der Fig. 1 mit einem vorschlagsgemäßen optischen Messsystem und
- Fig. 3: zwei mögliche Anordnungen von elektromagnetischen Sensorelementen in Relation zum Sichtfeld.

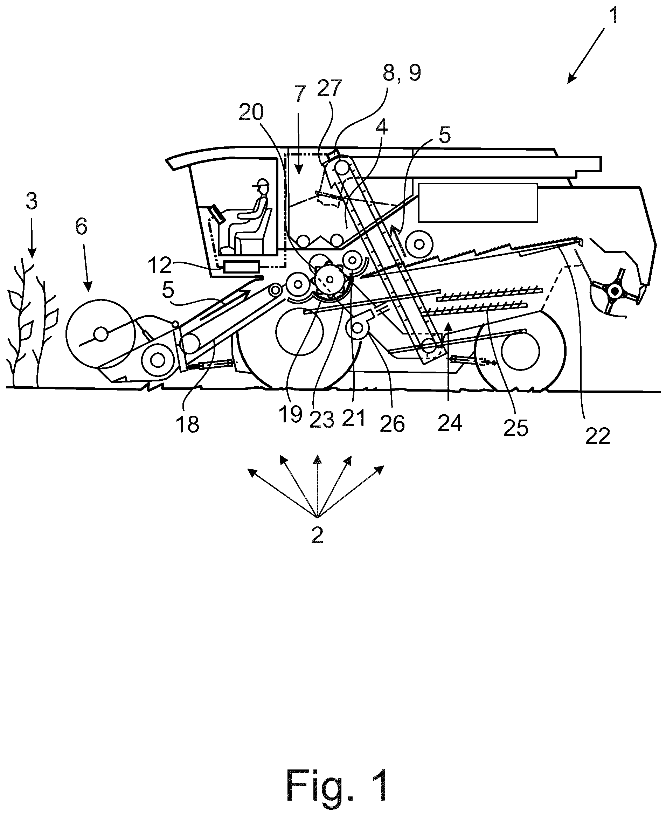

Die in Fig. 1 dargestellte landwirtschaftliche Erntemaschine, bei der es sich hier vorzugsweise um einen Mähdrescher 1 handelt, weist mindestens ein Arbeitsaggregat 2 zum Abernten eines Feldbestandes 3 und zum Verarbeiten von Erntegut 4 des Feldbestandes 3 auf. Eine weitere bevorzugte Erntemaschine ist ein Feldhäcksler. Im Betrieb der Erntemaschine wird das Erntegut 4 in einem Erntegutstrom entlang eines Ernteguttransportweges 5 durch die Erntemaschine transportiert.

Während des Transports durch die Erntemaschine bildet das Erntegut 4 einen Erntegutstrom. Unter dem Begriff "Erntegutstrom" ist vorliegend der Strom der zu verarbeitenden Pflanzenteile des Feldbestandes 3 auf dem Ernteguttransportweg 5 zu verstehen. Dieser Ernteguttransportweg 5 beginnt hier und vorzugsweise, speziell bei einem Mähdrescher 1, bei einem Schneidwerk 6 und geht jedenfalls bis zum Korntank 7. Der Erntegutstrom kann sich in einen Haupterntegutstrom und kleinere Teil-Erntegutströme unterteilen. Der Begriff "Haupterntegutstrom" bezeichnet dann denjenigen Teil des Erntegutstroms, der den überwiegenden Teil des Ernteguts 4, bezogen auf den gesamten Ernteguttransportweg 5, beinhaltet. Insbesondere zu Analysezwecken abzweigende Teil-Erntegutströme in kleinerem Umfang sind nicht umfasst.

Die landwirtschaftliche Erntemaschine weist eine Kontrollanordnung 8 auf, die ein an dem Ernteguttransportweg 5 angeordnetes Messsystem 9 zur Analyse des Ernteguts 4 aufweist. Die Analyse des Ernteguts umfasst eine Analyse der Zusammensetzung (Anteil an unbeschädigtem Korn, Anteil an Bruchkorn, Anteil an Nicht-Korn etc.) des Ernteguts im Erntegutstrom und/oder eine Analyse der Inhaltsstoffe (Feuchtigkeitsgehalt, Eiweißgehalt, Stärkegehalt, Zuckergehalt, Fettgehalt etc.) bestimmter Pflanzenbestandteile im Erntegutstrom, insbesondere des Korns.

Das Messsystem 9 weist einen ersten, passiven optischen Sensor 10 zur Aufnahme von Licht aus einem Wellenlängenbereich in einem ersten Sichtfeld 11 auf.

Mit passiven optischen Sensoren sind vorliegend jene optischen Sensoren gemeint, die grundsätzlich mit Umgebungslicht betreibbar sind. Dabei ist selbstverständlich nicht ausgeschlossen, dass das Messsystem 9 aktiv Licht ausstrahlt, wie anhand des Ausführungsbeispiels auch noch erläutert wird. Wichtig ist dabei jedoch, dass das Ausstrahlen selbst nicht Teil der Messung ist. Beispielsweise bei Laser-Abtastsystemen wie LIDAR, bei denen ein Nutzung von Umgebungslicht mit dem Sensor nicht vereinbar sind, gelten daher nicht als passiv. Ein spezifisches, auch sequentielles, Ausleuchten des Messbereichs hingegen, bei dem das Messprinzip ebenso durch mit einem Filter genutzt werden könnte, ist vorliegend den passiven optischen Sensoren zugeordnet.

Als optische Sensoren gelten alle lichtempfindlichen Sensoren, insbesondere auf dem Fotoeffekt basierende Sensoren. Dabei wird vorliegend eine weite Definition von Optik und Licht verwendet, so dass auch Infrarotstrahlung und Ultraviolettstrahlung als Licht und Teil der Optik gelten.

Der Begriff "Sichtfeld" betrifft jenen dreidimensionalen Raum, aus dem Licht über die entsprechende Optik auf den optischen Sensor treffen kann. Das Sichtfeld wird im allgemeinen Sprachgebrauch auch häufig mit dem englischen Begriff "Field of View" bezeichnet. Das Messfeld ist analog jener dreidimensionalen Raum, aus dem Messwerte aufgenommen werden können.

Das optische Messsystem 9 nimmt in einer Messroutine Bilddaten des ersten optischen Sensors 10 in dem Wellenlängenbereich auf, die Erntegut 4 in einem ersten Ausschnitt A₁ des Erntegutstroms abbilden. Der Begriff "Bilddaten" ist hierbei weit zu verstehen und betrifft ganz allgemein Sensordaten eines optischen Sensors. Der Ausschnitt des Ernteguts 4 ist der vom optischen Sensor zum Zeitpunkt der Aufnahme aus sichtbare Teil des Ernteguts 4. Er betrifft also den im Sichtfeld 11 befindlichen, nicht verdeckten Teil des Ernteguts 4.

Die Erntemaschine weist weiterhin eine Auswerteeinrichtung 12 zur Ermittlung eines, insbesondere die Zusammensetzung und/oder Inhaltsstoffe des Ernteguts 4 betreffenden, Erntegutparameters auf.

Wesentlich ist nun, dass das Messsystem 9 einen zweiten Sensor 13 zur Aufnahme von Sensordaten in einem Messfeld 14 aufweist. Das Messsystem 9 nimmt in der Messroutine Messwerte des zweiten Sensors 13 auf, die Erntegut 4 in einem zweiten Ausschnitt A2 des Erntegutstroms abbilden.

Bevorzugt sind elektrische Messprinzipien, insbesondere thermoelektrische, piezoelektrische, kapazitive, induktive oder resistive Messprinzipien. Ebenso bevorzugt sind magnetische Messprinzipien. Darunter fallen insbesondere magnetoelastische Messprinzipien und auf Magnetresonanz basierende Messprinzipien.

Die Abhängigkeit der jeweiligen Messwerte und des zu ermittelnden Erntegutparameters können experimentell bestimmt werden. Für alle genannten Messprinzipien sind diverse Sensoriken bekannt, die, gegebenenfalls mit entsprechenden, jedoch akzeptablen, Reduktionen der Genauigkeit, in landwirtschaftlichen Erntemaschinen eingesetzt werden können.

Hier und vorzugsweise basiert der erste Sensor 10 auf dem Fotoeffekt. Der zweite Sensor 13 basiert vorzugsweise auf einem nicht-optischen Messprinzip und nicht auf dem Fotoeffekt.

Der zweite Ausschnitt A₂ kann je nach Messprinzip zweidimensional oder dreidimensional sein. Zumeist wird es vorteilhaft sein, den zweiten Ausschnitt A₂ als relativ dünne Schicht auszugestalten.

Der erste und der zweite Ausschnitt A₁, A₂ überlappen zumindest teilweise in einem Überlappungsausschnitt U. Die Auswerteeinrichtung 12 korreliert in einer Analyseroutine die Bilddaten des ersten Sensors 10 zu dem Überlappungsausschnitt U und die Messdaten des zweiten Sensors 13 zu dem Überlappungsausschnitt U miteinander und ermittelt so den Erntegutparameter.

Der Begriff "korrelieren" ist hier weit zu verstehen. Ganz grundsätzlich werden die Bilddaten und Messwerte des ersten Sensors 10 und des zweiten Sensors 13 zusammen zur Ermittlung des Erntegutparameters herangezogen und dabei gemeinsam zur Ermittlung des Erntegutparameters verarbeitet. Hierfür können beispielsweise experimentell Abhängigkeiten zwischen den Daten bestimmt werden.

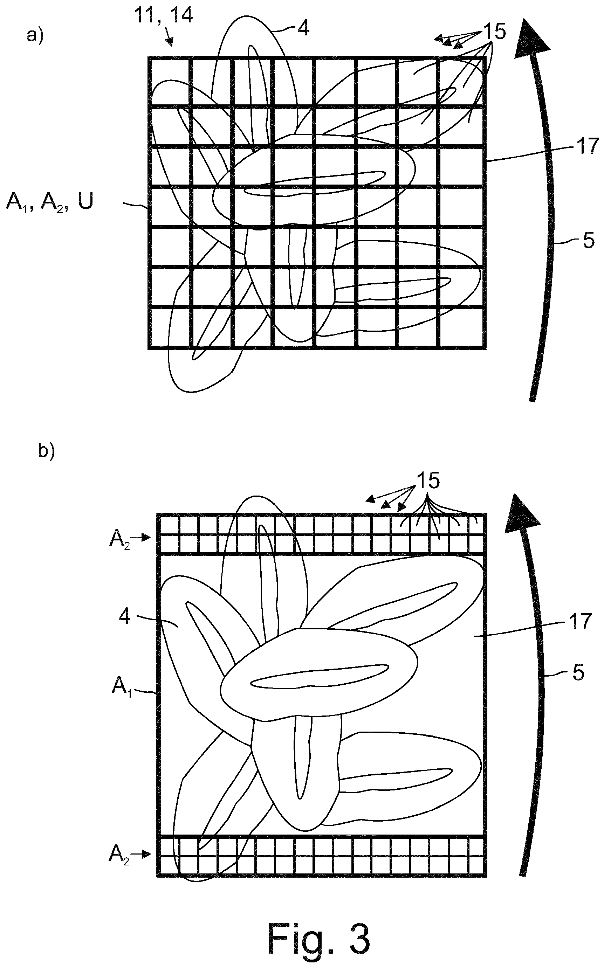

Der Überlappungsausschnitt U kann dabei zeitlich und/oder örtlich gebildet werden. Wie anhand von Fig. 3 noch erläutert werden wird, kann eine zeitlich versetzte Messung des Überlappungsausschnitts beispielsweise dadurch stattfinden, dass das Erntegut 4 entlang des Ernteguttransportweges 5 transportiert wird und erst an dem ersten Sensor 10 oder dem zweiten Sensor 13 und dann an dem jeweils anderen Sensor 13, 10 vorbeitransportiert wird. Da hier und vorzugsweise die Geschwindigkeit des Erntegutstroms der Auswerteeinrichtung 12 bekannt ist, kann der Überlappungsausschnitt U mittels der Geschwindigkeit des Erntegutstroms in den Bilddaten und Messwerten errechnet werden. Bei der örtlichen Bildung des Überlappungsausschnitts U überschneiden sich das Sichtfeld 11 und das Messfeld 14.

Es ergibt sich von selbst, dass der Ernteguttransportweg 5 jedenfalls teilweise durch das Sichtfeld und das Messfeld 11, 14, verläuft. Hier und vorzugsweise betrifft der Überlappungsausschnitt U den Erntegutstrom und insbesondere den Haupterntegutstrom. Eine statische Messung ist jedoch ebenso vorteilhaft denkbar.

Ein Beispiel für einen bevorzugt ermittelbaren Erntegutparameter ist ein Nicht-Kornanteil. Nach dem Dreschen des Ernteguts 4 sollten möglichst viele Körner von den Spelzen gelöst sein. Mittels eines optischen Messsystems lässt sich jedoch nur schwer oder gar nicht ermitteln, ob in einer Spelze noch ein Korn vorhanden ist. Bei einer Spelze im Überlappungsausschnitt U, die durch den ersten Sensor 10 nur zweidimensional dargestellt wird, lässt sich hier und vorzugsweise mittels des zweiten Sensors 13 eine dreidimensionale, den Inhalt der Spelze betreffende Information ermitteln. So unterscheiden sich beispielsweise die Permittivität und die Permeabilität einer Spelze mit Korn von einer Spelze ohne Korn. Beispielhaft kann die relative Permittivität von Nicht-Kornbestandteilen im Bereich von 1,5 liegen, während die relative Permittivität von Weizenkörnern im Bereich 3 bis 8 liegen kann. Diese Bereiche sind mittels des zweiten Sensors hier und vorzugsweis unterscheidbar.

Besonders interessant ist es, wenn die Bilddaten und/oder die Messwerte ortsaufgelöst vorliegen. Hier und vorzugsweise kann der Erntegutparameter dann anhand einzelner Bestandteile, insbesondere Körner und Spelzen, des Ernteguts 4 ortsaufgelöst ermittelt werden.

Entsprechend ist es hier und vorzugsweise so, dass der erste Sensor 10 zur ortsaufgelösten Aufnahme von Licht in dem Sichtfeld 11 eingerichtet ist und dass das Messsystem 9 in der Messroutine ortsaufgelöste Bilddaten des ersten Sensors 10 in dem Wellenlängenbereich aufnimmt, die den ersten Ausschnitt A₁ des Ernteguts 4 abbilden. Zusätzlich oder alternativ kann vorgesehen sein, dass der zweite Sensor 13 zur ortsaufgelösten Aufnahme von Sensordaten in dem Messfeld 14 eingerichtet ist und dass das Messsystem 9 in der Messroutine ortsaufgelöste Messwerte des zweiten Sensors 13 aufnimmt, die den zweiten Ausschnitt A₂ des Ernteguts 4 abbilden. Weiter zusätzlich oder alternativ ermittelt die Auswerteeinrichtung 12 in der Analyseroutine den Erntegutparameter ortsaufgelöst.

Der Begriff "ortsaufgelöst" bedeutet vorliegend, dass das Sichtfeld 11 bzw. Messfeld 14 des jeweiligen Sensors 10, 13 in mehrere Teil-Sichtfelder bzw. Teil-Messfelder unterteilt ist, die messtechnisch voneinander unterscheidbar sind. Der erste Sensor 10 weist also mindestens zwei Bildpunkte auf, die wenigstens teilweise ein unterschiedliches Teil-Sichtfeld aufweisen. Ein Bildpunkt ist dabei eine zweidimensionale Abbildung eines Teil-Sichtfelds. Bildpunkte werden im allgemeinen Sprachgebrauch häufig auch mit dem englischen Begriff "Pixel" bezeichnet. Analog weist der zweite Sensor 13 örtlich unterscheidbare Messpunkte auf.

Hier weist der zweite Sensor 13 mindestens ein elektromagnetisches Sensorelement 15 auf. Der Begriff "elektromagnetisch" bezieht sich vorliegend auf die zu messende Größe, die entsprechend eine elektrische oder eine magnetische Größe ist. In der Messroutine nimmt das Messsystem 9 Sensordaten des zweiten Sensors 13 auf, die mindestens eine elektrische und/oder magnetische Eigenschaft des zweiten Ausschnitts A2 des Ernteguts 4 abbilden. Dieses Aufnehmen geschieht entsprechend über mindestens eines der elektromagnetischen Sensorelemente 15.

Die elektrische Eigenschaft kann eine Impedanz und/oder eine Kapazität und/oder eine Induktivität und/oder einen Widerstand und/oder eine Kenngröße eines elektrischen Feldes, insbesondere die Permittivität oder die Leitfähigkeit, sein. Zusätzlich oder alternativ kann die magnetische Eigenschaft eine Kenngröße eines magnetischen Feldes, insbesondere die Permeabilität, sein. Die jeweilige Eigenschaft muss dabei nicht ausdrücklich berechnet werden, sondern nur von den Messdaten abgebildet werden, also aus diesen berechenbar sein. Es können auch mehrere Eigenschaften, gegebenenfalls mittels unterschiedlicher Messprinzipien, gemessen werden.

Das mindestens eine elektromagnetische Sensorelement 15 des zweiten Sensors 13 kann eine kapazitive Elektrode sein. Hier und vorzugsweise weist der zweite Sensor 13 viele kapazitive Elektroden auf. Dafür kann insbesondere auf die Technik von Touchscreens zurückgegriffen werden. Dementsprechend bilden die elektromagnetischen Sensorelemente 15 des zweiten Sensors 13, insbesondere die kapazitiven Elektroden, hier und vorzugsweise ein Raster, das ortsaufgelöst, insbesondere Kapazitäten, misst.

Das Messsystem 9 kann den zweiten Sensor 13 in der Messroutine als kontaktlosen Sensor betreiben. Insbesondere bei kapazitiven Sensoren ist es von Vorteil, dass diese mit dem Erntegut 4 nicht in direkten Kontakt kommen müssen.

Es kann vorgesehen sein, dass das Messsystem 9 in der Messroutine mittels des zweiten Sensors 13 die elektrische Eigenschaft kapazitiv, insbesondere projiziertkapazitiv, misst. Bei einer projiziert-kapazitiven Messung wird aus zwei leitfähigen Mustern, die insbesondere jeweils als Matrizen aus Kondensator-Elektroden fungieren, ein Muster, insbesondere eine Matrix, aus Kondensatoren gebildet. Beim Eindringen eines Objekts in das Feld eines der Kondensatoren ist somit ortsaufgelöst die Kapazität und/oder Kapazitätsänderung messbar, ohne dass das Objekt in direkten Kontakt mit dem Kondensator treten muss. Hier und vorzugsweise weist der zweite Sensor 13 mindestens 10, weiter vorzugsweise mindestens 100, noch weiter vorzugsweise mindestens 1000 elektromagnetische Sensorelemente 15 auf.

Fig. 3 zeigt zwei Möglichkeiten, den Überlappungsabschnitt U zu bilden. In Fig. 3a) ist vorgesehen, dass das Sichtfeld 11 und das Messfeld 14 einander örtlich großteils überschneiden oder sogar identisch sind. In Fig. 3b) hingegen ist das Messfeld 14 bezüglich der Transportrichtung des Ernteguts 4 entlang des Ernteguttransportwegs 5 vor und hinter dem Sichtfeld 11 angeordnet. Der Überlappungsausschnitt U wird dann durch einen zeitlichen Versatz der Messzeitpunkte der Messungen gebildet.

Der erste Sensor 10 kann zur Aufnahme von sichtbarem und/oder nicht-sichtbarem Licht aus mindestens einem sichtbaren und/oder nicht-sichtbaren Wellenlängenbereich in dem Sichtfeld 11 eingerichtet sein. Aufgrund der zum Teil leicht voneinander abweichenden Definitionen des sichtbaren Wellenlängenbereichs wird hier unter sichtbarem Licht der Wellenlängenbereich zwischen 380 nm und 780 nm verstanden.

Hier und vorzugsweise ist der erste Sensor 10 eine Kamera, insbesondere eine RGB-Kamera. Alternativ kann der erste Sensor 10 eine Multispektralkamera oder eine Hyperspektralkamera sein.

Eine RGB-Kamera ist eine Farbkamera, die mindestens einen roten, mindestens einen grünen und mindestens einen blauen Farbkanal aufweist. Sie kann also drei unterscheidbare Wellenlängenbereiche aufnehmen. Dabei ist es üblicherweise so, dass die Sensorelemente der Kamera mittels eines Farbfilters, insbesondere nach Art eines Bayer-Patterns, auf die Wellenlängenbereiche aufgeteilt werden. Eine Multispektralkamera weist ganz allgemein mindestens zwei unterscheidbare Wellenlängenbereiche und eine Ortsauflösung auf. Eine Hyperspektralkamera weist ebenfalls eine Ortsauflösung auf und nimmt pro Bildpunkt ein Spektrum mit hier mindestens 50 unterscheidbaren Wellenlängenbereichen auf.

Hier und vorzugsweise weist das Messsystem 9 ein Gehäuse 16 auf. Hier und vorzugsweise sind der erste Sensor 10 und der zweite Sensor 13 in dem Gehäuse 16 angeordnet. Dies betrifft hier und vorzugsweise jeweils den gesamten Sensor 10, 13. Alternativ kann auch nur ein Teil des jeweiligen Sensors 10, 13 in dem Gehäuse 16 angeordnet sein, insbesondere können alle lichtaufnehmenden Sensorelemente des optischen Sensors 10 und/oder alle elektromagnetischen Sensorelemente 15 des zweiten Sensors 13 in dem Gehäuse 16 angeordnet sein.

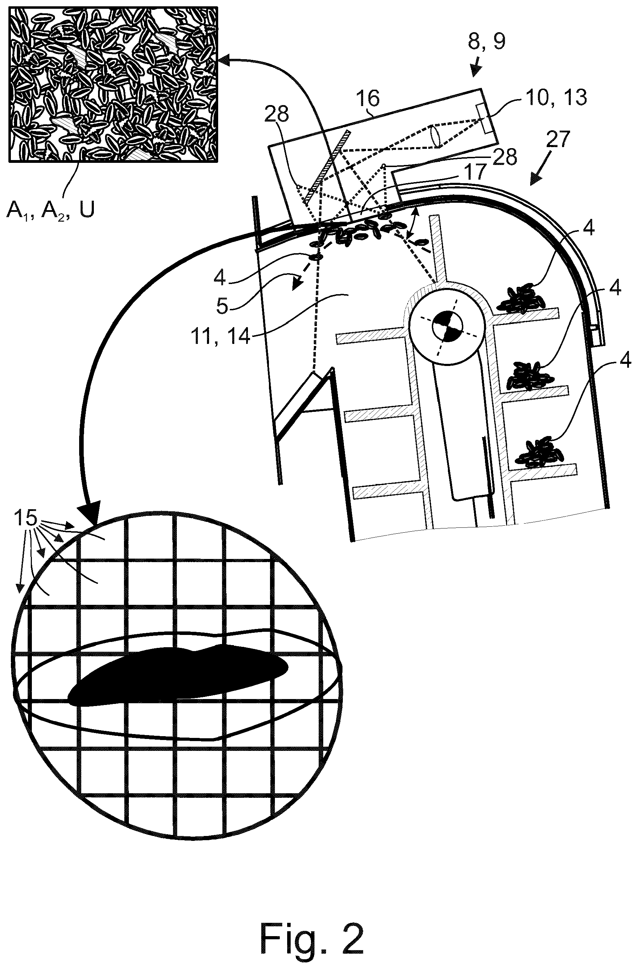

Das Messsystem 9 kann ein lichtdurchlässiges Fenster 17 aufweisen. Hier und vorzugsweise verläuft dann das von dem Erntegut 4, also von dem ersten Ausschnitt A₁ des Ernteguts 4, ausgehende von dem ersten, optischen Sensor 10 aufgenommene Licht durch das lichtdurchlässige Fenster 17 und vorzugsweise von dem lichtdurchlässigen Fenster 17 bis zu dem ersten, optischen Sensor 10 vollständig innerhalb des Gehäuses 16. Dies ist in Fig. 2 dargestellt. Es ist entsprechend bevorzugt, dass das lichtdurchlässige Fenster 17 Teil des Gehäuses 16 ist. Das lichtdurchlässige Fenster 16 kann in Kontakt mit dem Erntegut 4 kommen.

Hier und vorzugsweise ist mindestens ein elektromagnetisches Sensorelement 15 des zweiten Sensors 13 an dem lichtdurchlässigen Fenster 17 angeordnet. Mindestens ein an dem lichtdurchlässigen Fenster 17 angeordnetes elektromagnetisches Sensorelement 15 des zweiten Sensors 13 kann innerhalb oder außerhalb des Sichtfelds 11 angeordnet sein. Zusätzlich oder alternativ können das Sichtfeld 11 und das Messfeld 14 einander zumindest teilweise örtlich überschneiden.

Es kann vorgesehen sein, dass das lichtdurchlässige Fenster 17 unter dem Ernteguttransportweg 5 angeordnet ist. Insbesondere wenn das Erntegut 4, jedenfalls zeitweise, auf dem lichtdurchlässigen Fenster 17 aufliegt oder beim Transport mit diesem in Kontakt steht, ist eine besonders genaue, insbesondere kapazitive, Messung möglich.

Eine Möglichkeit der Ermittlung des Erntegutparameters ist, dass mittels der beiden Sensoren 10, 13 diverse Erntegutparameter und Störfaktoren unterschiedlich genau und sich gegenseitig störend ermittelt werden, wodurch ein Gleichungssystem gebildet wird, in dem die unterschiedlichen Faktoren jeweils zusammen das Messergebnis des jeweiligen Wellenlängenbereichs bilden. Bei ausreichender Bestimmtheit kann dieses Gleichungssystem dann gelöst werden. Interessant ist dabei auch, dass die unterschiedlichen Messprinzipien eine unterschiedliche Eindringtiefe in das Erntegut 4 aufweisen können, wodurch entsprechend unterschiedliche Erntegutparameter und Störfaktoren gemessen werden können.

Hier und vorzugsweise, wie mittels der beispielhaften RGB-Kamera angedeutet, kann der erste optische Sensor 10 zur ortsaufgelösten Aufnahme von sichtbarem Licht aus mindestens zwei, vorzugsweise mindestens drei, unterscheidbaren sichtbaren Wellenlängenbereichen in dem ersten Sichtfeld 11 eingerichtet sein. Der erste optische Sensor 10 kann zusätzlich oder alternativ zur ortsaufgelösten Aufnahme von sichtbarem Licht des gesamten sichtbaren Wellenlängenbereichs in dem ersten Sichtfeld 11 eingerichtet sein. Die unterscheidbaren Wellenlängenbereiche können gleichzeitig oder sequentiell aufgenommen werden. Das gleichzeitige Aufnehmen kann mittels eines Bayer-Patterns, Lichtbrechung, Strahlteilung und dergleichen erreicht werden. Das sequentielle Aufnehmen kann passiv durch Filterwechsel nach Art eines Filterrades oder durch sequentielle Beleuchtung in den unterschiedlichen Wellenlängenbereichen aktiv erreicht werden.

Der erste optische Sensor 10 kann als Zeilenkamera oder Flächenkamera mit Sensorelementen ausgestaltet sein. Die Sensorelemente nehmen jeweils örtlich unterschiedliche, insbesondere voneinander beabstandete, Bildpunkte des ersten Sichtfelds 11 auf. Es ist dabei bevorzugt so, dass die Bildpunkte einander nicht überlappen. Vorzugsweise weist der erste optische Sensor 10 mindestens 1.000, weiter vorzugsweise mindestens 10.000, Sensorelemente auf, die jeweils den gleichen Wellenlängenbereich aufnehmen. Der erste optische Sensor 10 weist also beispielsweise 1.000.000 mit einem grünen Filter versehene Sensorelemente auf. Zusätzlich oder alternativ können die Sensorelemente flächig, insbesondere auf einen gemeinsamen Sensorchip, angeordnet sein. Die Sensorelemente können nach bekannten Techniken beispielsweise als CCD-Sensorelemente oder CMOS-Sensorelemente oder InGaAs-Sensorelemente ausgestaltet sein. Sie können also, je nach zählweise einzeln oder in, insbesondere Vierer-, Gruppen, das bilden, was üblicherweise ebenfalls mit dem englischen Begriff "Pixel" bezeichnet wird.

Es lässt sich zusammenfassend sagen, dass der erste optische Sensor 10 hier und vorzugsweise für die ortsaufgelöste Aufnahme weniger Spektralbereiche vorgesehen ist. Dabei ist hier und vorzugsweise der Ortsauflösung jeweils auch eine Spektralauflösung zugeordnet, so dass sich aus Ortsauflösung und Spektralauflösung eine Matrix ergibt. Dies ist bekanntermaßen bei einem Bayer-Pattern der Fall.

Hier und vorzugsweise deckt der erste Ausschnitt A₁ mindestens 50%, weiter vorzugsweise mindestens 90%, noch weiter vorzugsweise mindestens 95%, noch weiter vorzugsweise mindestens 99% und noch weiter vorzugsweise 100% des zweiten Ausschnitts A₂ ab. Das Abdecken ist dabei zeitlich und/oder örtlich gemeint.

Alternativ kann bezüglich der zeitlichen Überdeckung vorgesehen sein, dass der erste Ausschnitt A₁ und der zweite Ausschnitt A₂ an ihren Rändern überlappen oder höchstens einen Meter, vorzugsweise höchstens einen halben Meter, weiter vorzugsweise höchstens zehn Zentimeter voneinander beabstandet sind.

Bei dem hier dargestellten Mähdrescher 1 zählt zu den Arbeitsaggregaten 2 neben dem bereits erwähnten Schneidwerk 6 ein mit diesem verbundene Schrägförderer 18, von dem aus der Erntegutstrom an von einem Dreschkorb 19 ummantelte Dreschorgane 20 übergeben wird. Über eine Umlenktrommel 21 gelangt der Erntegutstrom in eine hier als Trennrotor ausgebildete Trenneinrichtung 22, in welcher freibewegliche Körner des Erntegutstroms in einem unteren Bereich abgeschieden werden. Von hieraus gelangt der Erntegutstrom über einen Rücklaufboden 23 zu einer Reinigungsvorrichtung 24, die wie hier dargestellt aus mehreren Siebebenen 25 und einem Gebläse 26 besteht. Von hier aus führt der Kornelevator 27 den Erntegutstrom schließlich zum Korntank 7. All diese Arbeitsaggregate 2 tragen dabei zur Verarbeitung des Ernteguts 4 bei.

Das Messsystem 9 ist hier und vorzugsweise an dem Kornelevator 27 angeordnet. Ganz allgemein kann das lichtdurchlässige Fenster 17 an den Ernteguttransportweg 5 angrenzen und/oder diesen begrenzen. Das lichtdurchlässige Fenster 17 kann für alle von dem ersten Sensor 10 aufgenommenen Wellenlängenbereiche durchlässig sein. Das Sichtfeld 11 und das Messfeld 14 können vollständig durch das lichtdurchlässige Fenster 17 verlaufen.

Es kann vorgesehen sein, dass das optische Messsystem 9 eine Lichtquelle 28 aufweist. Die Lichtquelle 28 ist vorzugsweise eingerichtet, Licht einiger oder aller von dem ersten Sensor 10 aufgenommene Wellenlängenbereiche gleichzeitig abzustrahlen. Zusätzlich oder alternativ kann die Lichtquelle 28 eingerichtet sein, sequentiell Licht einiger oder aller von dem ersten Sensor 10 aufgenommene Wellenlängenbereiche abzustrahlen.

Hier und vorzugsweise bestrahlt die Lichtquelle 28 den Überlappungsausschnitt U und/oder den ersten Ausschnitt A₁. Vorzugsweise bestrahlt die Lichtquelle 28 den Ausschnitt A₁ aus Richtung des ersten, optischen Sensors 10. Es ist also bevorzugt, dass deroptische Sensor 10 reflektiertes Licht anstelle von transmittiertem Licht aufnimmt. Insbesondere kann auch vorgesehen sein, dass die Lichtquelle 28 außerhalb des Sichtfelds 11 angeordnet ist.

Wie bereits erwähnt, weist die landwirtschaftliche Erntemaschine einen Kornelevator 27 auf. Hier und vorzugsweise ist der erste Sensor 10 und/oder der zweite Sensor 13 und/oder das lichtdurchlässige Fenster 17 und/oder die Lichtquelle 28 und/oder das Gehäuse 16 an, insbesondere unter oder über, dem Kornelevator 27 angeordnet. Alternativ kann der erste Sensor 10 und/oder der zweite Sensor 13 und/oder das lichtdurchlässige Fenster 17 und/oder die Lichtquelle 28 und/oder das Gehäuse 16 hinter dem Kornelevator 27, insbesondere im Bereich einer Korntankbefüllung, angeordnet sein. Weitere mögliche Anordnungen, insbesondere bei einem Feldhäcksler im Bereich eines Auswurfs, sind ebenso bevorzugt. Auch eine Anordnung vor dem Kornelevator 27 ist möglich. In dem letztgenannten Fall ist das oder sind die jeweiligen Elemente vorzugsweise hinter dem letzten dreschenden oder dem letzten abscheidenden Arbeitsaggregat 2 angeordnet.

Es kann entsprechend vorgesehen sein, dass der Überlappungsausschnitt U Teil einer Unterseite oder einer Oberseite des Erntegutstroms, insbesondere des Haupterntegutstroms, entlang des Ernteguttransportweges 5 ist. Alternativ kann die landwirtschaftliche Erntemaschine eine Schleusenkammer aufweisen, in der das Erntegut 4 zeitweise nicht, oder zumindest langsamer, transportiert wird. Dann kann der Überlappungsausschnitt U ein Teil einer Seite, insbesondere einer Unterseite, des in der Schleusenkammer befindlichen Ernteguts 4 sein.

Besagte Schleusenkammer ist bereits für Feuchte-Messungen grundsätzlich bekannt. Besonders interessant ist, dass einige der vorgeschlagenen Messprinzipien relativ langsam sind und entsprechend bei stationärem Erntegut 4 vorteilhafter anwendbar. Die bei einigen Erntemaschinen bereits vorhandene Schleusenkammer kann dann mittels eines vorschlagsgemäßen Messsystems 9 aufgerüstet werden, um diverse Erntegutparameter zu ermitteln.

Der Erntegutparameter betrifft hier und vorzugsweise einen Kornanteil und/oder einen Bruchkornanteil und/oder einen Nicht-Kornanteil, insbesondere einen Anteil an Ährenspitzen und/oder unausgedroschenen Bestandteilen und/oder Stroh und/oder Stängelstücken und/oder Lieschblättern, und/oder eine Kornfeuchtigkeit und/oder einen Inhaltsstoff des Ernteguts 4, insbesondere einen Proteingehalt und/oder Stärkegehalt.

Gemäß einer weiteren Lehre, der eigenständige Bedeutung zukommt, wird ein Verfahren zum Betrieb einer vorschlagsgemäßen landwirtschaftlichen Erntemaschine vorgeschlagen, bei dem mittels der landwirtschaftlichen Arbeitsmaschine ein Feldbestand 3 abgeerntet und Erntegut 4 verarbeitet wird, wobei mittels des optischen Messsystems 9 die Messroutine durchgeführt wird und wobei mittels der Auswerteinrichtung 12 die Analyseroutine durchgeführt wird. Auf alle Ausführungen zu der vorschlagsgemäßen landwirtschaftlichen Erntemaschine darf verwiesen werden.

Bevorzugt bei dem Verfahren ist, dass die Messroutine und die Analyseroutine mehrfach, insbesondere fortlaufend, durchgeführt werden. Vorzugsweise wird der Erntegutparameter in Echtzeit ermittelt. Der Begriff "Echtzeit" bedeutet hier, dass zwischen Aufnahme der jeweiligen Bilddaten und Ermittlung des Erntegutparameters nur eine vordefinierte Zeitspanne liegt, die hier und vorzugsweise kleiner als eine Minute, vorzugsweise kleiner als 30 Sekunden, weiter vorzugsweise kleiner als fünf Sekunden ist. Der Erntegutparameter kann einem Benutzer angezeigt werden.

Insbesondere im Rahmen des vorschlagsgemäßen Verfahrens kann vorgesehen sein, dass die Kontrollanordnung 8 zyklisch Bildserien und Messwertserien aufnimmt. Vorzugsweise wird dann innerhalb einer vorbestimmten Verarbeitungszeit nach der Aufnahme einer Bildserie und Messwertserie ein auf der Bildserie und der Messwertserie basierender Erntegutparameter ermittelt und angezeigt.

### Bezugszeichenliste

- 1: Mähdrescher
- 2: Arbeitsaggregat
- 3: Feldbestand
- 4: Erntegut
- 5: Ernteguttransportweg
- 6: Schneidwerk
- 7: Korntank
- 8: Kontrollanordnung
- 9: optisches Messsystem
- 10: erster Sensor
- 11: Sichtfeld
- 12: Auswerteeinrichtung
- 13: zweiter Sensor
- 14: Messfeld
- 15: elektromagnetisches Sensorelement
- 16: Gehäuse
- 17: lichtdurchlässiges Fenster
- 18: Schrägförderer
- 19: Dreschkorb
- 20: Dreschorgane
- 21: Umlenktrommel
- 22: Trenneinrichtung
- 23: Rücklaufboden
- 24: Reinigungsvorrichtung
- 25: Siebebenen
- 26: Gebläse
- 27: Kornelevator
- 28: Lichtquelle
- A₁: erster Ausschnitt
- A₂: zweiter Ausschnitt
- U: Überlappungsausschnitt

## Patentansprüche

1. Landwirtschaftliche Erntemaschine, insbesondere Mähdrescher (1) oder Feldhäcksler, mit mindestens einem Arbeitsaggregat (2) zum Abernten eines Feldbestandes (3) und zur Verarbeitung von Erntegut (4) des Feldbestandes (3), wobei das Erntegut (4) im Betrieb der Erntemaschine entlang eines Ernteguttransportweges durch die Erntemaschine in einem Erntegutstrom transportiert wird,
mit einer Kontrollanordnung (8), die ein zumindest teilweise an dem Ernteguttransportweg (5) angeordnetes Messsystem (9) zur Analyse der Zusammensetzung und/oder von Inhaltsstoffen des Ernteguts (4) aufweist,
wobei das Messsystem (9) einen ersten, passiven optischen Sensor (10) zur Aufnahme von Licht aus einem Wellenlängenbereich in einem Sichtfeld (11) aufweist, wobei das Messsystem (9) in einer Messroutine Bilddaten des ersten optischen Sensors (10) in dem Wellenlängenbereich aufnimmt, die Erntegut (4) in einem ersten Ausschnitt (A1 ) des Erntegutstroms abbilden,
wobei die Erntemaschine eine Auswerteeinrichtung (12) zur Ermittlung eines , insbesondere die Zusammensetzung und/oder Inhaltsstoffe des Ernteguts (4) betreffenden, Erntegutparameters aufweist,
**dadurch gekennzeichnet,**
**dass** das Messsystem (9) einen zweiten, nicht-passiv-optischen, insbesondere nicht-optischen, Sensor (13) zur Aufnahme von Sensordaten in einem Messfeld (14) aufweist, dass das Messsystem (9) in der Messroutine Messwerte des zweiten Sensors (13) aufnimmt, die Erntegut (4) in einem zweiten Ausschnitt (A2 ) des Erntegutstroms abbilden,
**dass** der erste und der zweite Ausschnitt (A1 , A2 ) zumindest teilweise in einem Überlappungsausschnitt (U) überlappen und dass die Auswerteeinrichtung (12) in einer Analyseroutine die Bilddaten des ersten Sensors (10) zu dem Überlappungsausschnitt (U) und die Messwerte des zweiten Sensors (13) zu dem Überlappungsausschnitt (U) miteinander korreliert und so den Erntegutparameter ermittelt,
wobei der zweite Sensor (13) mindestens ein elektromagnetisches Sensorelement (15) aufweist, dass das Messsystem in der Messroutine Sensordaten des zweiten Sensors (13) aufnimmt, die mindestens eine elektrische und/oder magnetische Eigenschaft des zweiten Ausschnitts (A2 ) des Ernteguts abbilden, vorzugsweise, dass die elektrische Eigenschaft eine Impedanz und/oder eine Kapazität und/oder eine Induktivität und/oder ein Widerstand und/oder eine Kenngröße eines elektrischen Feldes, insbesondere die Permittivität oder die Leitfähigkeit, ist, und/oder, dass die magnetische Eigenschaft eine Kenngröße eines magnetischen Feldes, insbesondere die Permeabilität, ist.

2. Landwirtschaftliche Erntemaschine nach Anspruch 1, **dadurch gekennzeichnet, dass** der erste Sensor (10) zur ortsaufgelösten Aufnahme von Licht in dem Sichtfeld (11) eingerichtet ist, dass das Messsystem (9) in der Messroutine ortsaufgelöste Bilddaten des ersten Sensors (10) in dem Wellenlängenbereich aufnimmt, die den ersten Ausschnitt (A1 ) des Ernteguts (4) abbilden, und/oder, dass der zweite Sensor (13) zur ortsaufgelösten Aufnahme von Sensordaten in dem Messfeld (14) eingerichtet ist, dass das Messsystem (9) in der Messroutine ortsaufgelöste Messwerte des zweiten Sensors (13) aufnimmt, die den zweiten Ausschnitt (A2 ) des Ernteguts (4) abbilden, vorzugsweise, dass die Auswerteeinrichtung (12) in der Analyseroutine den Erntegutparameter ortsaufgelöst ermittelt.

3. Landwirtschaftliche Erntemaschine nach einem der vorhergehenden Ansprüche, **dadurch gekennzeichnet, dass** das mindestens eine elektromagnetische Sensorelement (15) des zweiten Sensors (13) eine kapazitive Elektrode ist, vorzugsweise, dass das Messsystem (9) den zweiten Sensor (13) in der Messroutine als kontaktlosen Sensor betreibt, weiter vorzugsweise, dass das Messsystem in der Messroutine mittels des zweiten Sensors (13) die elektrische Eigenschaft kapazitiv, insbesondere projiziert-kapazitiv, misst.

4. Landwirtschaftliche Erntemaschine nach einem der vorhergehenden Ansprüche, **dadurch gekennzeichnet, dass** der erste Sensor (10) zur Aufnahme von sichtbarem und/oder nicht-sichtbarem Licht aus mindestens einem sichtbaren und/oder nicht-sichtbaren Wellenlängenbereich in dem Sichtfeld (11) eingerichtet ist, vorzugsweise, dass der erste Sensor (10) eine Kamera, insbesondere eine RGB-Kamera, ist, oder, dass der erste Sensor (10) eine Multispektralkamera oder eine Hyperspektralkamera ist.

5. Landwirtschaftliche Erntemaschine nach einem der vorhergehenden Ansprüche, **dadurch gekennzeichnet, dass** das Messsystem (9) ein Gehäuse (16) aufweist, vorzugsweise, dass der erste Sensor (10) und der zweite Sensor (13) in dem Gehäuse (16) angeordnet sind.

6. Landwirtschaftliche Erntemaschine nach einem der vorhergehenden Ansprüche, **dadurch gekennzeichnet, dass** das Messsystem (9) ein lichtdurchlässiges Fenster (17) aufweist, vorzugsweise, dass das von dem Erntegut (4) ausgehende, von dem ersten Sensor (10) aufgenommene Licht durch das lichtdurchlässige Fenster (17), und vorzugsweise von dem lichtdurchlässigen Fenster (17) bis zu dem ersten Sensor (10) vollständig innerhalb des Gehäuses (16) verläuft.

7. Landwirtschaftliche Erntemaschine nach Anspruch 6, **dadurch gekennzeichnet, dass** mindestens ein elektromagnetisches Sensorelement (15) des zweiten Sensors (13) an dem lichtdurchlässigen Fenster (17) angeordnet ist, vorzugsweise, dass das mindestens eine an dem lichtdurchlässigen Fenster (17) angeordnete elektromagnetische Sensorelement (15) des zweiten Sensors (13) innerhalb oder außerhalb des Sichtfelds (11) angeordnet ist, und/oder, dass das Sichtfeld (11) und das Messfeld (14) einander zumindest teilweise örtlich überschneiden.

8. Landwirtschaftliche Erntemaschine nach einem der vorhergehenden Ansprüche, **dadurch gekennzeichnet, dass** die landwirtschaftlichen Erntemaschine einen Kornelevator (27) aufweist und der erste optische Sensor (10) und/oder zweite optische Sensor (13) und/oder das lichtdurchlässige Fenster (17) und/oder das Gehäuse (16) an, insbesondere unter, dem Kornelevator (27) angeordnet ist, und/oder, dass der Überlappungsausschnitt (U) Teil einer Unterseite oder einer Oberseite eines Erntegutstroms entlang des Ernteguttransportweges (5) ist.

9. Landwirtschaftliche Erntemaschine nach einem der vorhergehenden Ansprüche, **dadurch gekennzeichnet, dass** der Erntegutparameter einen Kornanteil und/oder einen Bruchkornanteil und/oder einen Nicht-Kornanteil, insbesondere einen Anteil an Ährenspitzen und/oder unausgedroschenen Bestandteilen und/oder Stroh und/oder Stängelstücken und/oder Lieschblättern, und/oder eine Kornfeuchtigkeit und/oder eine Strohfeuchtigkeit und/oder einen Inhaltsstoff des Ernteguts (4), insbesondere einen Proteingehalt und/oder einen Stärkegehalt, betrifft.

10. Verfahren zum Betrieb einer landwirtschaftlichen Erntemaschine nach einem der vorhergehenden Ansprüche, bei dem mittels der landwirtschaftlichen Arbeitsmaschine ein Feldbestand (3) abgeerntet und Erntegut (4) verarbeitet wird, wobei mittels des optischen Messsystems (9) die Messroutine durchgeführt wird und wobei mittels der Auswerteinrichtung (12) die Analyseroutine durchgeführt wird.

## Claims

1. An agricultural harvesting machine, in particular a combine harvester (1) or forage harvester, with at least one working assembly (2) for harvesting a field crop (3) and for processing harvested material (4) from the field crop (3), wherein, during the operation of the harvesting machine, the harvested material (4) is transported through the harvesting machine along a harvested material transport path as a flow of harvested material,
with a monitoring assembly (8) which has a measuring system (9) for the analysis of the composition and/or of constituents of the harvested material (4) and which is at least partially disposed on the harvested material transport path (5),
wherein the measuring system (9) has a first, passive optical sensor (10) for receiving light from a range of wavelengths in a field of view (11), wherein, in a measurement routine, the measuring system (9) receives image data from the first optical sensor (10) in the range of wavelengths which represent the harvested material (4) in a first section (A₁) of the flow of harvested material,
wherein the harvesting machine has an evaluation device (12) for determining a harvested material parameter, in particular relating to the composition and/or constituents of the harvested material (4),
**characterized in that**
the measuring system (9) has a second, non-passive optical, in particular non-optical sensor (13) for receiving sensor data in a field of measurement (14), **in that** in the measurement routine, the measuring system (9) receives measured values from the second sensor (13) which represent the harvested material (4) in a second section (A₂) of the flow of harvested material,
**in that** the first and the second sections (A₁, A₂) overlap at least in part in an overlapping section (U) and **in that** in an analysis routine, the evaluation device (12) correlates the image data for the overlapping section (U) from the first sensor (10) with the measured values for the overlapping section (U) from the second sensor (13) and thereby determines the harvested material parameter,
wherein the second sensor (13) has at least one electromagnetic sensor element (15), **in that** in the measurement routine, the measuring system receives sensor data from the second sensor (13) which represent at least one electrical and/or magnetic property of the second section (A₂) of the harvested material, preferably **in that** the electrical property is an impedance and/or a capacitance and/or an inductance and/or a resistance and/or a parameter of an electric field, in particular the permittivity or the conductivity, and/or **in that** the magnetic property is a parameter of a magnetic field, in particular the permeability.

2. The agricultural harvesting machine according to claim 1, **characterized in that** the first sensor (10) is configured for the spatially resolved recording of light in the field of view (11), **in that** in the measurement routine, the measuring system (9) receives spatially resolved image data from the first sensor (10) in the range of wavelengths which represent the first section (A₁) of the harvested material (4), and/or **in that** the second sensor (13) is configured for the spatially resolved recording of sensor data in the field of measurement (14), **in that** in the measurement routine, the measuring system (9) receives spatially resolved measured values from the second sensor (13) which represent the second section (A₂) of the harvested material (4), preferably **in that** in the analysis routine, the evaluation device (12) determines the harvested material parameter in a spatially resolved manner.

3. The agricultural harvesting machine according to one of the preceding claims, **characterized in that** the at least one electromagnetic sensor element (15) of the second sensor (13) is a capacitive electrode, preferably **in that** in the measurement routine, the measuring system (9) operates the second sensor (13) as a contactless sensor, more preferably **in that** in the measurement routine, the measuring system measures the electrical property capacitively, in particular in a projected capacitive manner, by means of the second sensor (13).

4. The agricultural harvesting machine according to one of the preceding claims, **characterized in that** the first sensor (10) is configured to record visible and/or non-visible light from at least one visible and/or non-visible range of wavelengths in the field of view (11), preferably **in that** the first sensor (10) is a camera, in particular a RGB camera, or **in that** the first sensor (10) is a multispectral camera and/or a hyperspectral camera.

5. The agricultural harvesting machine according to one of the preceding claims, **characterized in that** the measuring system (9) has a housing (16), preferably **in that** the first sensor (10) and the second sensor (13) are disposed in the housing (16).

6. The agricultural harvesting machine according to one of the preceding claims, **characterized in that** the measuring system (9) has a translucent window (17), preferably **in that** the light emanating from the harvested material (4) received by the first sensor (10) passes through the translucent window (17), and preferably from the translucent window (17) to the first sensor (10) entirely within the housing (16).

7. The agricultural harvesting machine according to claim 6, **characterized in that** at least one electromagnetic sensor element (15) of the second sensor (13) is disposed on the translucent window (17), preferably **in that** the at least one electromagnetic sensor element (15) of the second sensor (13) disposed on the translucent window (17) is disposed inside or outside the field of view (11), and/or **in that** the field of view (11) and the field of measurement (14) at least partially coincide spatially.

8. The agricultural harvesting machine according to one of the preceding claims, **characterized in that** the agricultural harvesting machine has a grain elevator (27) and the first optical sensor (10) and/or second optical sensor (13) and/or the translucent window (17) and/or the housing (16) is disposed on, in particular below the grain elevator (27), and/or in that the overlapping section (U) is part of an underside and/or an upper side of a flow of harvested material along the harvested material transport path (5).

9. The agricultural harvesting machine according to one of the preceding claims, **characterized in that** the harvested material parameter is a grain fraction and/or a damaged grain fraction and/or a non-grain fraction, in particular a fraction of awns and/or unthreshed components and/or straw and/or stem parts and/or husks and/or a grain moisture content and/or a straw moisture content and/or a constituent of the harvested material (4), in particular a protein content and/or a starch content.

10. A method for operating an agricultural harvesting machine according to one of the preceding claims, in which a field crop (3) is harvested by means of the agricultural working machine and harvested material (4) is processed, wherein the measurement routine is executed using the optical measuring system (9) and wherein the analysis routine is executed using the evaluation device (12).

## Revendications

1. Machine de récolte agricole, en particulier moissonneuse-batteuse (1) ou ensileuse, comprenant au moins un organe de travail (2) pour récolter une culture en champ (3) et pour traiter du produit récolté (4) de la culture en champ (3), le produit récolté (4) étant transporté, lors du fonctionnement de la machine de récolte, le long d'un trajet de transport de produit récolté à travers la machine de récolte, en un flux de produit récolté,
comprenant un agencement de contrôle (8) qui comporte un système de mesure (9) disposé au moins en partie sur le trajet de transport de produit récolté (5) pour analyser la composition et/ou des composants du produit récolté (4),
le système de mesure (9) comportant un premier capteur optique passif (10) pour capter de la lumière issue d'une plage de longueurs d'ondes dans un champ de vision (11), le système de mesure (9) recueillant, dans une routine de mesure, des données d'image du premier capteur optique (10) dans la plage de longueurs d'ondes, lesquelles représentent le produit récolté (4) dans une première portion (A1) du flux de produit récolté,
la machine de récolte comportant un équipement d'analyse (12) pour déterminer un paramètre de produit récolté concernant en particulier la composition et/ou des composants du produit récolté (4),
**caractérisée en ce que**
le système de mesure (9) comporte un second capteur non passif optique (13), en particulier non optique, pour recueillir des données de capteur dans un champ de mesure (14), **en ce que** le système de mesure (9) recueille, dans la routine de mesure, des valeurs de mesure du second capteur (13) qui représentent le produit récolté (4) dans une seconde portion (A2) du flux de produit récolté,
**en ce que** la première et la seconde portion (A1, A2) se chevauchent au moins en partie dans une portion de chevauchement (U), et **en ce que** l'équipement d'analyse (12) corrèle entre elles, dans une routine d'analyse, les données d'image du premier capteur (10) relatives à la portion de chevauchement (U) et les valeurs de mesure du second capteur (13) relatives à la portion de chevauchement (U) et détermine ainsi le paramètre de produit récolté,
le second capteur (13) comportant au moins un élément de capteur électromagnétique (15), **en ce que** le système de mesure recueille, dans la routine de mesure, des données de capteur du second capteur (13) qui représentent au moins une propriété électrique et/ou magnétique de la seconde portion (A2) du produit récolté, de préférence **en ce que** la propriété électrique est une impédance et/ou une capacité et/ou une inductance et/ou une résistance et/ou une grandeur caractéristique d'un champ électrique, en particulier la permittivité ou la conductibilité, et/ou **en ce que** la propriété magnétique est une grandeur caractéristique d'un champ magnétique, en particulier la perméabilité.

2. Machine de récolte agricole selon la revendication 1, **caractérisée en ce que** le premier capteur (10) est agencé pour une détection à résolution spatiale de lumière dans le champ de vision (11), **en ce que** le système de mesure (9) recueille, dans la routine de mesure, des données d'image à résolution spatiale du premier capteur (10) dans la plage de longueurs d'ondes, lesquelles représentent la première portion (A1) du produit récolté (4), et/ou **en ce que** le second capteur (13) est agencé pour la détection à résolution spatiale de données de capteur dans le champ de mesure (14), **en ce que** le système de mesure (9) recueille, dans la routine de mesure, des valeurs de mesure à résolution spatiale du second capteur (13), lesquelles représentent la seconde portion (A2) du produit récolté (4), de préférence **en ce que** l'équipement d'analyse (12) détermine, dans la routine d'analyse, le paramètre de produit récolté, avec une résolution spatiale.

3. Machine de récolte agricole selon une des revendications précédentes, **caractérisée en ce que** l'élément de capteur électromagnétique (15), au nombre d'au moins un, du second capteur (13) est une électrode capacitive, de préférence **en ce que** le système de mesure (9) fait fonctionner le second capteur (13) en tant que capteur sans contact dans la routine de mesure, notamment de préférence **en ce que** le système de mesure mesure, dans la routine de mesure, au moyen du second capteur (13), la propriété électrique de manière capacitive, en particulier de manière capacitive projetée.

4. Machine de récolte agricole selon une des revendications précédentes, **caractérisée en ce que** le premier capteur (10) est agencé pour capter de la lumière visible et/ou non visible issue au moins d'une plage de longueurs d'ondes visibles et/ou non visibles dans le champ de vision (11), de préférence **en ce que** le premier capteur (10) est une caméra, en particulier une caméra RVB, ou **en ce que** le premier capteur (10) est une caméra multispectrale ou une caméra hyperspectrale.

5. Machine de récolte agricole selon une des revendications précédentes, **caractérisée en ce que** le système de mesure (9) comporte un boîtier (16), de préférence **en ce que** le premier capteur (10) et le second capteur (13) sont disposés dans le boîtier (16).

6. Machine de récolte agricole selon une des revendications précédentes, **caractérisée en ce que** le système de mesure (9) comporte une fenêtre translucide (17), de préférence **en ce que** la lumière provenant du produit récolté (4), captée par le premier capteur (10), passe à travers la fenêtre translucide (17) et de préférence de la fenêtre translucide (17) jusqu'au premier capteur (10), entièrement à l'intérieur du boîtier (16).

7. Machine de récolte agricole selon la revendication 6, **caractérisée en ce qu'**au moins un élément de capteur électromagnétique (15) du second capteur (13) est disposé sur la fenêtre translucide (17), de préférence **en ce que** l'élément de capteur électromagnétique (15), au nombre d'au moins un, du second capteur (13), disposé sur la fenêtre translucide (17), est placé à l'intérieur ou à l'extérieur du champ de vision (11), et/ou **en ce que** le champ de vision (11) et le champ de mesure (14) se coupent localement au moins en partie.

8. Machine de récolte agricole selon une des revendications précédentes, **caractérisée en ce que** la machine de récolte agricole comporte un élévateur de grains (27) et le premier capteur optique (10) et/ou le second capteur optique (13) et/ou la fenêtre translucide (17) et/ou le boîtier (16) est disposé(e) sur, en particulier sous l'élévateur de grains (27), et/ou **en ce que** la portion de chevauchement (U) fait partie d'un dessous ou d'un dessus d'un flux de produit récolté, le long du trajet de transport de produit récolté (5).

9. Machine de récolte agricole selon une des revendications précédentes, **caractérisée en ce que** le paramètre de produit récolté concerne une proportion de grains et/ou une proportion de grains cassés et/ou une proportion de non-grains, en particulier une proportion de pointes d'épis et/ou de constituants incomplètement battus et/ou de paille et/ou de morceaux de tiges et/ou de feuilles d'enveloppe, et/ou une humidité de grain et/ou une humidité de paille et/ou un composant du produit récolté (4), en particulier une teneur en protéines et/ou une teneur en amidon.

10. Procédé de fonctionnement d'une machine de récolte agricole selon une des revendications précédentes, selon lequel une culture en champ (3) est récoltée et le produit récolté (4) est traité au moyen de la machine de travail agricole, la routine de mesure étant réalisée au moyen du système de mesure optique (9), et la routine d'analyse étant réalisée au moyen de l'équipement d'analyse (12).
